# FASCICULE DE BREVET EUROPEEN

(11) **EP 3 562 672 B1**
(45) Date de publication et mention de la délivrance du brevet: **19.04.2023**
(21) Numéro de dépôt: 17825260.7
(22) Date de dépôt: 27.12.2017
(51) Int. Cl.: B33Y 30/00, B33Y 50/02

(54) **CARTOUCHE ET SYSTÈME D'IMPRESSION DE PIÈCES TRIDIMENSIONNELLES**
PATRONE UND SYSTEM ZUM DRUCKEN VON DREIDIMENSIONALEN TEILEN
CARTRIDGE AND SYSTEM FOR PRINTING THREE-DIMENSIONAL PARTS

(30) Priorité: 30.12.2016 FR 1663561
(43) Date de publication de la demande: 06.11.2019
(73) Titulaire: Viaccess, 92057 Paris La Défense (FR)
(72) Inventeur: PIRA, Emmanuel, 35520 Melesse (FR)
(74) Mandataire: Lavoix
(86) Numéro de dépôt international: PCT/EP2017/084639
(87) Numéro de publication internationale: WO 2018/122259

(56) Documents cités:
- WO-A1-2015/120538
- WO-A2-2016/109819
- US-A1- 2011 121 476
- US-A1- 2014 263 209

## Description

La présente invention concerne une cartouche d'impression pour système d'impression de pièces tridimensionnelles, et un système d'impression de pièces tridimensionnelles associé.

L'invention se situe dans le domaine de l'impression en 3D par des systèmes d'impression dédiés, plus communément appelés imprimantes 3D.

Dans les dernières années, le marché des imprimantes 3D est en pleine expansion, à la fois pour les usages professionnels et pour les usages des particuliers.

Il existe de nombreux modèles d'imprimantes 3D ayant un coût raisonnable, vendus pour l'usage des particuliers, par exemple pour l'impression d'objets ludiques ou artistiques.

Un autre usage des imprimantes 3D est l'impression de diverses pièces de rechange pour divers appareils, par exemple dans le domaine de l'électroménager.

De telles pièces ont des spécifications précises en ce qui concerne les matériaux à utiliser, et la forme tridimensionnelle de la pièce.

Les systèmes d'impression 3D connus comportent une tête d'impression et un plateau d'impression, mobiles l'un par rapport à l'autre en translation selon trois axes, permettant d'imprimer une pièce tridimensionnelle de forme prédéterminée par couches successives, la tête d'impression étant alimentée en matériau(x) d'impression. Par exemple, le matériau d'impression est un filament fusible, et la tête d'impression en est alimentée au moyen d'une bobine autour de laquelle il a préalablement été enroulé.

Pour réaliser une ou plusieurs pièces de forme tridimensionnelle prédéterminée, les imprimantes 3D connues utilisent des instructions de code exécutable d'impression dans un langage de commande adapté, exécutables par un microcontrôleur qui contrôle les déplacements relatifs dans l'espace, selon les 3 axes de déplacement, de la tête et du plateau d'impression, ainsi que les quantités de matériaux d'impression à utiliser.

Les instructions d'impression sont par exemple transmises au système d'impression via un port USB (« Universal Serial Bus ») depuis un autre dispositif, ou bien via une carte mémoire, par exemple une carte SD (« secure digital »), insérée dans un lecteur dédié du système d'impression.

Dans les systèmes dans lesquels le matériau d'impression est un filament fusible, l'utilisateur peut être amené à intervenir manuellement pour changer la bobine de filament à utiliser, par exemple pour faire varier la couleur ou toute autre propriété du matériau d'impression, telle par exemple que sa dureté, son élasticité ou sa densité. Il existe alors un risque d'impression, volontairement ou non, de pièces non conformes à leur conception légitime.

Ainsi, il serait utile de mettre au point un système d'impression 3D qui soit d'utilisation plus simple, permette de réduire le risque ci-dessus, ainsi que de limiter l'utilisation possible des instructions de code exécutable, et notamment le nombre d'impressions réalisables. A cet effet, l'invention vise à fournir, de façon solidaire, les instructions de code exécutable d'impression d'une pièce prédéterminée, ainsi que le matériau nécessaire à cette impression.

WO2016109819 montre une imprimante tridimensionnelle comprenant un système de distribution comprenant au moins deux cartouches amovibles adaptées pour distribuer différents matériaux,

A cet effet, l'invention propose une cartouche d'impression pour système d'impression de pièces tridimensionnelles, contenant au moins une réserve d'au moins un matériau d'impression. Cette cartouche comporte un module d'accès à des instructions de code exécutable par le système d'impression pour imprimer au moins une pièce tridimensionnelle de forme prédéterminée en utilisant le ou les matériau(x) d'impression contenu(s) dans la cartouche, la ou les réserve(s) de matériau(x) d'impression contenue(s) dans la cartouche comprenant le ou les matériaux d'impression en quantité(s) prédéterminée(s), nécessaire(s) et suffisante(s) pour réaliser l'impression d'un nombre prédéterminé desdites pièces tridimensionnelles.

La cartouche d'impression pour système d'impression de pièces tridimensionnelles selon l'invention peut présenter une ou plusieurs des caractéristiques ci-dessous, prises indépendamment ou selon toutes les combinaisons techniquement acceptables.

Le module d'accès est une unité de stockage électronique apte à mémoriser des données, et la cartouche comporte en outre au moins une unité de connexion adaptée à se connecter à une unité de réception correspondante appartenant à un support de cartouche d'impression dudit système d'impression, ladite unité de connexion étant adaptée pour transmettre lesdites données mémorisées à une unité de calcul et de commande du système d'impression via ladite unité de réception.

Le module d'accès mémorise les instructions de code dans un langage de commande de machine adapté.

Le module d'accès mémorise un identifiant d'accès comportant une adresse d'accès, dans un réseau de télécommunications, auxdites instructions de code sur un serveur distant.

Le module d'accès à des instructions de code est un identifiant disposé ou gravé sur une face externe de la cartouche d'impression, ledit identifiant encodant une adresse d'accès, dans un réseau de télécommunications, auxdites instructions de code sur un serveur distant.

Le matériau d'impression comprend au moins un filament fusible, ou un liquide d'impression ou une poudre d'impression.

La réserve de matériau d'impression comporte une bobine à dérouler d'au moins un type de filament fusible.

La cartouche comporte une buse chauffante adaptée à transformer ledit filament fusible en matière liquide adaptée pour l'impression d'une pièce tridimensionnelle par couches.

La cartouche comporte au moins un capteur parmi un capteur de température et un capteur de changement de type de filament.

Selon un autre aspect, l'invention concerne un système d'impression de pièces tridimensionnelles qui comporte un support de cartouche adapté à recevoir une cartouche d'impression telle que brièvement décrite ci-dessus.

Selon une caractéristique, le support de cartouche comporte une interface de connexion adaptée à récupérer un identifiant d'accès à des instructions de code d'impression de pièce tridimensionnelle ou des instructions de code d'impression d'au moins une pièce tridimensionnelle en utilisant le ou les matériaux d'impression contenus dans ladite cartouche.

D'autres caractéristiques et avantages de l'invention ressortiront de la description qui en est donnée ci-dessous, à titre indicatif et nullement limitatif, en référence aux figures annexées, parmi lesquelles :
- la figure 1 illustre schématiquement les blocs fonctionnels d'un système d'impression 3D selon l'état de la technique ;
- la figure 2 illustre schématiquement les blocs fonctionnels d'un système d'impression 3D selon un premier mode de réalisation de l'invention ;
- la figure 3 illustre schématiquement les blocs fonctionnels d'un système d'impression 3D selon un deuxième mode de réalisation de l'invention ;
- la figure 4 illustre schématiquement une partie de cartouche d'impression et un support de cartouche correspondant selon un mode de réalisation de l'invention ;
- la figure 5 illustre schématiquement une autre partie de cartouche d'impression selon un mode de réalisation de l'invention.

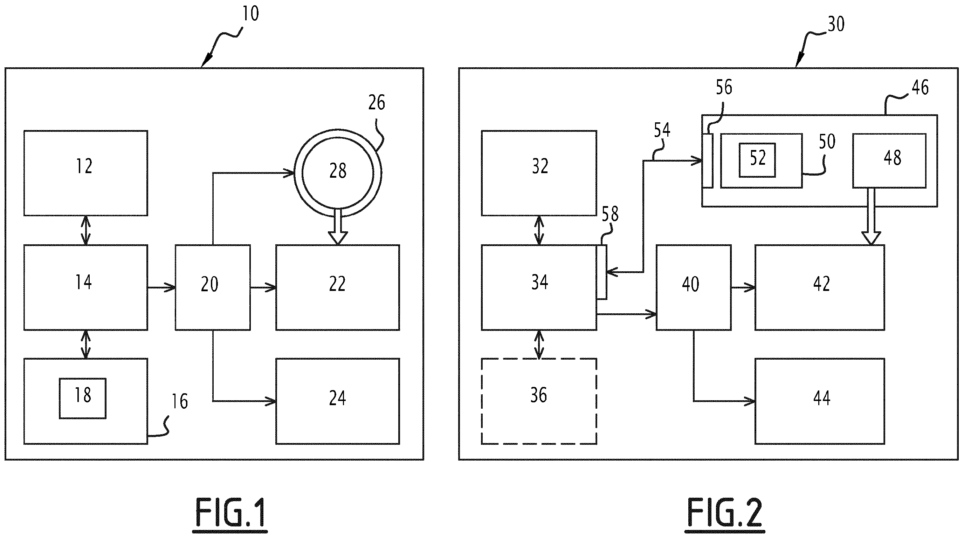

La figure 1 représente schématiquement les blocs fonctionnels d'un système d'impression 3D classique, selon l'état de la technique.

Le système d'impression 10 comprend une interface utilisateur 12, comportant divers éléments d'interaction (boutons, écran tactile) permettant à un utilisateur de commander le système d'impression 10.

Le système d'impression 10 comprend également une unité de calcul et de commande 14, comportant un ou plusieurs processeurs, adaptée à exécuter des instructions de programme informatique et à commander le fonctionnement des éléments du système d'impression 10 lorsqu'il est mis sous tension.

En variante, l'unité de calcul et de commande 14 est un circuit logique programmable de type FPGA ou ASIC.

Le système 10 comporte également une unité mémoire de stockage d'informations électronique 16, apte à stocker des instructions de code exécutable, notamment des instructions de code 18 décrivant les mouvements à réaliser par la tête d'impression et le plateau d'impression pour reproduire la forme tridimensionnelle d'une pièce à imprimer et permettant de commander l'impression d'une telle pièce.

Par exemple, les instructions de code exécutable 18 sont en format G-code, ou tout autre langage de commande numérique de machine.

L'unité de stockage d'informations 16 est tout support amovible, par exemple une carte SD, qui est inséré par l'utilisateur dans un lecteur dédié du système 10.

En variante, l'unité de stockage d'informations 16 est intégrée au système 10.

En variante, les instructions de code exécutable 18 sont reçues par l'unité de stockage 16 via une unité de communication réseau non représentée, sur commande de l'utilisateur.

Les blocs fonctionnels 12, 14, 16 sont connectés via un bus de communication.

L'unité de calcul et de commande 14 est adaptée à commander une unité de commande de déplacement 20, adaptée à commander le déplacement selon les axes de déplacement prévus d'une tête d'impression 22 et d'un plateau d'impression 24 sur lequel sont déposées les couches successives de matériau pour former une ou plusieurs pièces tridimensionnelles.

La tête d'impression 22 est mobile selon au moins une direction spatiale, et reçoit un matériau d'impression pour la réalisation d'une pièce 3D à partir d'une unité 26 de fourniture de matériau d'impression.

Par exemple, l'unité 26 de fourniture de matériau d'impression est formée d'une bobine 28 de filament fusible, par exemple en matériau plastique, le filament étant déroulé au fur et à mesure de l'impression, et la tête d'impression 22 comprend une buse chauffante (non représentée), qui fond le filament afin de le déposer sous forme de matière liquide couche par couche pour la formation de la pièce 3D.

Le déroulement de la bobine 28 de filament fusible est par exemple également contrôlé par l'unité de commande de déplacement 20.

La figure 2 illustre schématiquement les principaux blocs fonctionnels d'un système 30 d'impression 3D selon un premier mode de réalisation de l'invention.

Le système 30 d'impression 3D comporte une interface utilisateur 32 et une unité de calcul et de commande 34, analogues respectivement aux unités 12 et 14 décrites ci-dessus.

Il comporte également une unité de stockage d'informations 36, une unité 40 de commande de déplacement, une tête d'impression 42 et un plateau 44.

Selon une variante, les unités 34 et 36 sont intégrées dans un microcontrôleur.

Cependant, à la différence du système d'impression 10, le système d'impression 30 comporte une cartouche amovible 46 contenant à la fois au moins une réserve 48 d'un matériau d'impression de pièces 3D et un module 50 d'accès à des instructions de code pour commander le système d'impression à imprimer des pièces tridimensionnelles prédéterminées. Le module 50 permet l'accès à des instructions de code exécutable, par exemple en langage de commande G-code, pour commander l'impression de pièces tridimensionnelles de forme prédéterminée en utilisant le ou les matériaux contenus dans la cartouche amovible 46. La cartouche contient des matériaux pour imprimer un nombre N prédéterminé de ces pièces.

Dans le mode de réalisation de la figure 2, le module 50 d'accès à des instructions de code est une unité de stockage électronique d'informations, par exemple une carte mémoire, mémorisant des instructions de code exécutable 52.

De préférence, la réserve 48 comporte la quantité de matériaux d'impression nécessaire et suffisante pour permettre l'impression d'un nombre prédéterminé de pièce(s) tridimensionnelle(s) de forme(s) prédéterminée(s).

Avantageusement, la fourniture de la quantité adéquate de matériaux d'impression limite l'utilisation des instructions de code exécutable 52, et donc le nombre d'exemplaires imprimables de la ou des pièce(s) tridimensionnelle(s) prédéterminée(s), et évite en outre tout gaspillage.

Les instructions de code exécutable 52 sont transmises à l'unité de contrôle et de commande 34 via une liaison 54 de communication de données lorsque la cartouche amovible 46 est fixée selon un mode de fixation prévu dans le système d'impression 30.

Par exemple, dans un mode de réalisation, la cartouche amovible 46 comporte une unité de connexion 56, adaptée à se connecter à une unité de réception 58 du système d'impression 3D, permettant ainsi de réaliser une liaison de transmission de données 54.

Par exemple, l'unité de connexion 56 est un connecteur de type USB, et l'unité de réception 58 est une prise USB adaptée à recevoir le connecteur USB lorsque la cartouche 46 est insérée dans l'emplacement prévu à cet effet dans le système d'impression 30.

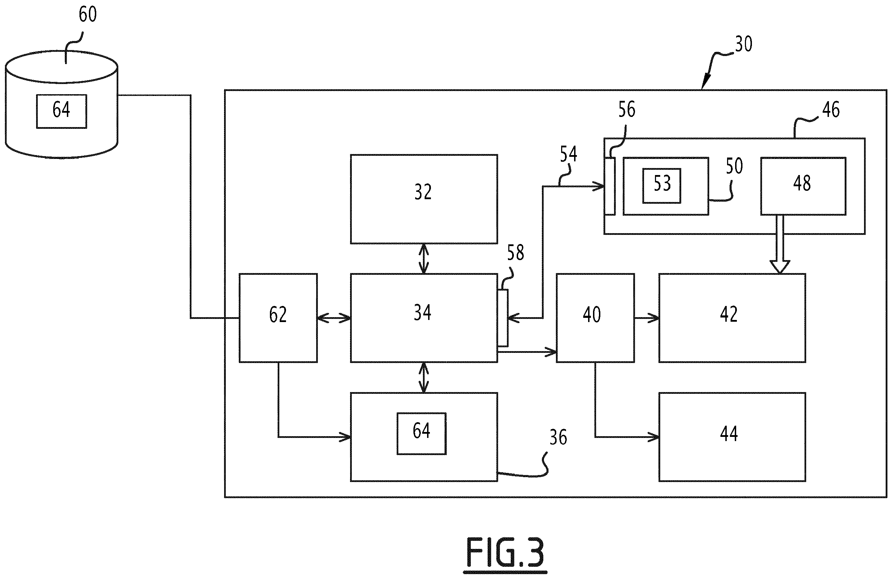

Selon un deuxième mode de réalisation d'un système d'impression, illustré à la figure 3, l'unité de stockage d'informations 50 appartenant à la cartouche amovible 46 mémorise un identifiant d'accès 53, par exemple un identifiant comportant une adresse d'accès dans un réseau de télécommunications, par exemple sous forme d'une URL (*Uniform Resource Locator*), à un serveur distant 60 où est mémorisé un ensemble d'instructions de code exécutable permettant de réaliser la ou les pièces tridimensionnelles prédéterminée(s).

Dans ce mode de réalisation, le système 30 d'impression 3D comprend en outre un module de communication 62 permettant une connexion à un réseau de télécommunications et le téléchargement des instructions de code exécutable 64 à l'adresse URL extraite de l'identifiant d'accès 53. Les instructions de code 64 sont par exemple mémorisées par l'unité de stockage d'informations 36 après téléchargement.

Selon une variante, les instructions de code sont mémorisées sous forme chiffrée, et l'unité de stockage d'informations 50 mémorise également une clé cryptographique de déchiffrement permettant de déchiffrer les instructions de code. La clé cryptographique est transmise à l'unité de calcul et de commande 34 via la liaison 54.

Selon une autre variante, les instructions de code 64 sont transmises à la volée, c'est-à-dire au fur et à mesure de leur téléchargement par le module de communication 62, à l'unité de contrôle et de commande 34, et exécutées en temps réel par celle-ci, sans être mémorisées dans l'unité de stockage d'informations 36 plus longtemps que ne le nécessite cette exécution.

Selon une autre variante de ce deuxième mode de réalisation, le module 50 d'accès à des instructions de code pour commander le système d'impression à imprimer des pièces tridimensionnelles est réalisé par un identifiant disposé ou gravé sur une face externe de la cartouche amovible, à un emplacement prédéterminé, par exemple un identifiant de type QR-code ou code barre, qui encode une adresse d'accès dans un réseau de télécommunications, par exemple sous forme d'une URL, au serveur distant 60 où est mémorisé un ensemble d'instructions de code exécutable 64 permettant de réaliser la ou les pièce(s) tridimensionnelle(s) prédéterminée(s).

Dans cette variante, le support de cartouche adapté à recevoir la cartouche amovible est équipé d'un lecteur adapté, par exemple d'un lecteur à diodes laser, positionné de manière à lire l'identifiant de type QR-code ou code barre correspondant.

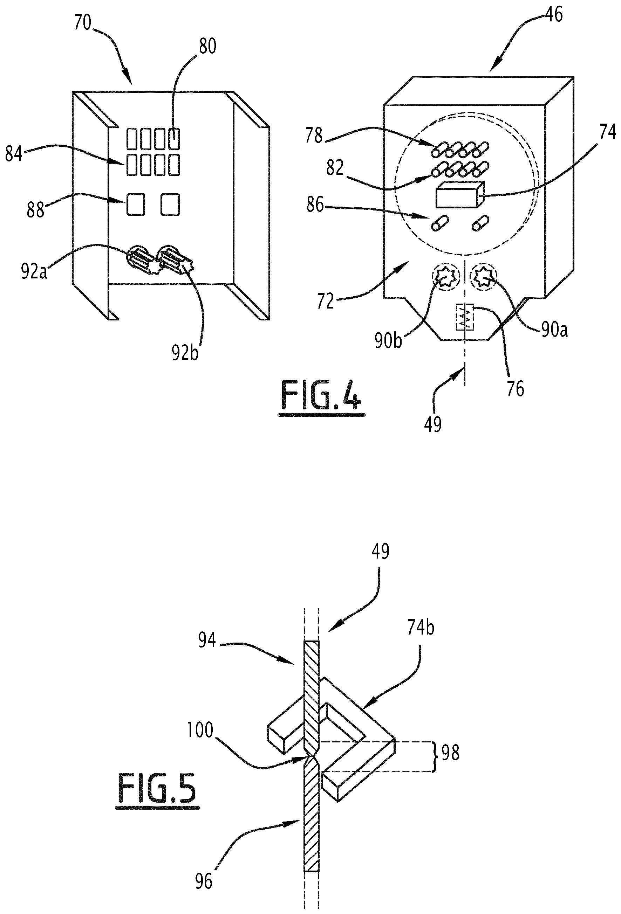

La figure 4 représente schématiquement une vue en semi-perspective d'une face 72 de cartouche amovible 46 selon un premier mode de réalisation, et une vue correspondante d'un support de cartouche 70 faisant partie d'un système d'impression 3D selon l'invention.

Les éléments représentés à la figure 4 réalisent un système d'interfaçage électro-mécanique entre la cartouche amovible et le support de cartouche du système d'impression, permettant le fonctionnement lorsque la cartouche amovible est insérée dans ce support.

Comme illustré schématiquement, le support de cartouche 70 a une forme adaptée pour recevoir la cartouche amovible 46 de manière à réaliser un accouplement mécanique et une pluralité de connexions électriques.

Dans ce mode de réalisation, outre la réserve de matériau(x) 48 pour l'impression de pièces 3D et le module 50 d'accès à des instructions de code pour commander le système d'impression, la cartouche 46 comprend au moins un capteur 74, qui est un capteur de température, pour obtenir des informations de température à intervalles de temps réguliers donnés.

En variante, plusieurs autres capteurs adaptés à fournir des informations sont présents, incluant par exemple un capteur de changement de type de filament tel que décrit ci-après.

Dans le mode de réalisation illustré, le matériau d'impression est un filament fusible 49, et la cartouche comprend également une buse chauffante 76, dans laquelle vient s'insérer le filament fusible au fur et à mesure de l'impression.

De plus, la face 72 de la cartouche 46 est munie d'un ensemble d'éléments de connexion 78 en saillie, adaptés à s'insérer dans des emplacements de réception 80 du support de cartouche 70, pour former une connexion, permettant la transmission de données du module d'accès 50 (non visible sur la figure 4). Les éléments de connexion 78 sont connectés au module d'accès 50.

Les éléments de connexion 78 et les emplacements de réception 80 correspondent respectivement à des réalisations d'une unité de connexion 56 et d'une unité de réception 58, telles que décrites ci-dessus en référence aux figures 2 et 3.

Par exemple, les éléments 78 et 80 réalisent une connexion série de type USB ou une connexion parallèle comme pour une carte SD.

Il est à noter que dans le mode de réalisation dans lequel le module 50 d'accès à des instructions de code pour commander le système d'impression est réalisé par un identifiant disposé ou gravé sur une face externe de la cartouche amovible, les éléments de contact 78 et 80 ne sont pas présents. Le support de cartouche 70 comprend un lecteur adapté à lire ledit identifiant.

La face 72 de la cartouche 46 est munie d'un ensemble d'éléments de connexion 82, adaptés à s'insérer dans des emplacements de réception 84 du support de cartouche 70, permettant la transmission d'informations obtenues par les capteurs 74. Les éléments de connexion 82 sont connectés aux capteurs 74.

Enfin, la face 72 de la cartouche 46 comprend des éléments de contact 86 en saillie, adaptés à s'insérer dans des emplacements de réception 88 du support de cartouche 70, permettant de réaliser un contact électrique pour alimenter électriquement les éléments de la cartouche amovible, par exemple pour alimenter électriquement la buse 76.

La face 72 de la cartouche 46 comprend en outre des manchons 90a, 90b, adaptés pour recevoir chacun un arbre 92a, 92b, en saillie sur le support de cartouche 70, permettant de réaliser un accouplement mécanique. Dans le mode de réalisation illustré, deux manchons 90a et 90b sont positionnés de manière à réaliser l'entraînement du filament 49 lorsque les arbres 92a, 92b correspondants sont en mouvement, ce qui permet de contrôler le déroulement du filament pour l'impression d'une pièce 3D par la mise en rotation des arbres 92a, 92b par l'unité 40 de commande de déplacement du système d'impression 3D.

Les éléments 80, 84, 88, 92a, 92b forment une interface de connexion mécanique et électrique du support de cartouche 70 avec la cartouche amovible 46, permettant de récupérer à la fois les instructions de code d'impression et les informations obtenues par les capteurs 74, et de commander l'utilisation des matériaux d'impression lors de l'impression effective.

Avantageusement, la cartouche 46 comprend la réserve 48 d'un matériau d'impression adapté, en qualité et quantité, pour la réalisation des seules pièces 3D prédéterminées, définies par les instructions de code accessibles via le module d'accès 50.

Il est alors possible de choisir par exemple une bobine de filament contenant plusieurs matériaux, de propriétés variées (dureté, élasticité, densité ou couleur par exemple), en correspondance avec les instructions de code à exécuter, pour réaliser des pièces de format prédéterminé.

En effet, la ou les pièces à imprimer sont imprimée(s) par couches de matière empilées successivement, donc il est possible de calculer la quantité de filament d'un type et/ou d'une couleur donné(e) en fonction du volume de la ou des couche(s) de matière correspondantes.

De préférence, la bobine de filaments complète est constituée d'une pluralité de filaments, variant par le type de matière (e.g. plastique ou caoutchouc, conditionnant leurs dureté, élasticité ou densité) et/ou la couleur, qui se succèdent.

Afin de réaliser précisément les pièces prédéterminées, de préférence, la bobine de filament est constituée d'une pluralité de filaments, et deux filaments successifs sont reliés entre eux par un segment de transition ayant une marque adaptée à être détectée par un capteur de changement de filament approprié, comme illustré schématiquement à la figure 5 pour un mode de réalisation.

Dans le mode de réalisation de la figure 5, la bobine 48 comprend un premier filament 94, un deuxième filament 96, reliés par un segment de transition 98 comportant une marque 100.

Le premier type de filament 94 est réalisé en une première matière, par exemple en matière plastique ayant une première valeur de dureté, et ayant une première couleur. Le premier type de filament est cylindrique d'un premier diamètre.

Le deuxième type de filament 96 est réalisé en une deuxième matière, par exemple en matière plastique ayant une deuxième valeur de dureté, et ayant une deuxième couleur. Le deuxième type de filament est cylindrique d'un deuxième diamètre, qui peut être égal au premier diamètre.

Dans le mode de réalisation illustré, la marque 100 à détecter est un amincissement du premier diamètre du premier filament, cet amincissement étant détectable par un capteur 74b, qui est dans ce mode de réalisation une fourche optique.

Lorsque la marque 98 passe devant le capteur 74b, une information de variation lumineuse est détectée. Cette information est transmise, via les éléments 82 et leur liaison avec les éléments 84, à l'unité de calcul et de commande 34 qui exécute les instructions de code d'impression de pièce 3D.

L'information de variation lumineuse est par exemple utilisée pour commander une purge d'un éventuel surplus de la première matière dans une zone dédiée de l'imprimante.

En variante, la marque à détecter est un changement de couleur de filament, et le capteur 74b est remplacé par un capteur colorimétrique.

Dans une autre variante, la cartouche d'impression comporte plusieurs bobines de filaments et, la sélection du filament d'une couleur ou d'une matière donné(e) est réalisée électromécaniquement en amont d'une buse chauffante apte à recevoir en entrée plusieurs filaments ou de plusieurs buses chauffantes adaptées respectivement à chacun des filaments.

Selon un deuxième mode de réalisation d'une cartouche amovible selon l'invention, la cartouche ne comprend pas de buse chauffante, ni de manchons adaptés à recevoir des arbres d'entraînement du filament, ces éléments étant intégrés dans le support adapté à recevoir la cartouche amovible, ou dans d'autres parties du système d'impression 3D.

Dans ce cas, la cartouche d'impression a un moindre coût de fabrication.

Selon une variante, la cartouche ne comprend pas de buse chauffante mais comprends des manchons tels que décrits ci-dessus adaptés à recevoir des arbres d'entraînement du filament.

Dans les modes de réalisation décrits ci-dessus, l'impression 3D est réalisée en utilisant du filament fusible.

En variante, une cartouche amovible selon l'invention comporte, à titre de réserve(s) de matériau(x) d'impression, un ou plusieurs réservoirs de matériau(x) à base de poudre ou de liquide, et un système d'interfaçage électro-mécanique adapté en conséquence pour commander la fourniture de matériau(x) d'impression au fur et à mesure de l'exécution des instructions de code par l'unité de calcul et de commande du système d'impression.

D'une manière générale, diverses variantes de réalisation d'un système d'impression 3D, en termes de matériaux utilisés et d'agencement sont compatibles avec l'invention.

Avantageusement, la fourniture d'une cartouche d'impression comportant à la fois au moins un matériau d'impression et un module d'accès à des instructions de code permettant au système d'impression d'imprimer au moins une pièce tridimensionnelle de forme prédéterminée en utilisant le ou les matériau(x) d'impression contenu(s) dans la cartouche permet de contraindre à la fois l'utilisation du matériau pour la seule impression de la ou des pièce(s) tridimensionnelle(s) prédéterminée(s), et l'impression de la ou des pièce(s) tridimensionnelle(s) prédéterminée(s) (c'est-à-dire l'utilisation des instructions de code exécutable correspondantes) à n'être réalisée qu'avec le matériau solidairement fourni, et donc à diminuer le risque d'impression non conforme à sa conception légitime d'une pièce prédéterminée, et à limiter le nombre d'exemplaires imprimables de la ou des pièce(s) tridimensionnelle(s) prédéterminée(s).

En plus, cela permet, le cas échéant, de protéger les instructions de code d'impression, par exemple en utilisant le chiffrement, tout en contrôlant le nombre de pièces fabriquées.

## Revendications

1. Cartouche d'impression pour système d'impression de pièces tridimensionnelles, contenant au moins une réserve (28, 48) d'un matériau d'impression, **caractérisée en ce qu'**elle comporte un module (50) d'accès à des instructions de code (52, 64) exécutable par le système d'impression pour imprimer au moins une pièce tridimensionnelle de forme prédéterminée en utilisant le ou les matériau(x) d'impression contenu(s) dans la cartouche, la ou les réserve(s) de matériau(x) d'impression contenue(s) dans la cartouche comprenant le ou les matériaux d'impression en quantité(s) prédéterminée(s), nécessaire(s) et suffisante(s) pour réaliser l'impression d'un nombre prédéterminé desdites pièces tridimensionnelles.

2. Cartouche d'impression selon la revendication 1, dans laquelle ledit module (50) d'accès est une unité de stockage électronique apte à mémoriser des données, et comportant en outre au moins une unité de connexion (56) adaptée à se connecter à une unité de réception (58) correspondante appartenant à un support de cartouche d'impression dudit système d'impression, ladite unité de connexion (56) étant adaptée pour transmettre lesdites données mémorisées à une unité de calcul et de commande (34) du système d'impression via ladite unité de réception (58).

3. Cartouche d'impression selon la revendication 2, dans laquelle le module (50) d'accès mémorise les instructions de code (52) dans un langage de commande de machine adapté.

4. Cartouche d'impression selon la revendication 2, dans laquelle le module (50) d'accès mémorise un identifiant d'accès (53) comportant une adresse d'accès, dans un réseau de télécommunications, auxdites instructions de code (64) sur un serveur (60) distant.

5. Cartouche d'impression selon la revendication 1, dans laquelle ledit module (50) d'accès à des instructions de code est un identifiant disposé ou gravé sur une face externe de la cartouche d'impression, ledit identifiant encodant une adresse d'accès, dans un réseau de télécommunications, auxdites instructions de code (64) sur un serveur (60) distant.

6. Cartouche d'impression selon l'une des revendications 1 à 5, dans laquelle ledit matériau d'impression comprend au moins un filament fusible, ou un liquide d'impression ou une poudre d'impression.

7. Cartouche d'impression selon l'une des revendications 1 à 6, dans laquelle ladite au moins une réserve (48) de matériau d'impression comporte une bobine à dérouler d'au moins un type de filament fusible.

8. Cartouche d'impression selon la revendication 7, comportant une buse chauffante (76) adaptée à transformer ledit filament fusible en matière liquide adaptée pour l'impression d'une pièce tridimensionnelle par couches.

9. Cartouche d'impression selon l'une des revendications 7 ou 8, comportant au moins un capteur (74, 74b) parmi un capteur de température (74) et un capteur (74b) de changement de type de filament.

10. Système d'impression de pièces tridimensionnelles **caractérisé en ce qu'**il comporte un support de cartouche (70) adapté à recevoir une cartouche d'impression (46)contenant au moins une réserve (28, 48) d'un matériau d'impression, ladite cartouche d'impression comportant un module (50) d'accès à des instructions de code (52, 64) exécutable par le système d'impression pour imprimer au moins une pièce tridimensionnelle de forme prédéterminée en utilisant le ou les matériau(x) d'impression contenu(s) dans la cartouche, la ou les réserve(s) de matériau(x) d'impression contenue(s) dans la cartouche comprenant le ou les matériaux d'impression en quantité(s) prédéterminée(s), nécessaire(s) et suffisante(s) pour réaliser l'impression d'un nombre prédéterminé desdites pièces tridimensionnelles, ledit support de cartouche (70) comportant une interface de connexion adaptée à récupérer un identifiant d'accès (53) à des instructions de code (64) d'impression de pièce tridimensionnelle ou des instructions de code (52) d'impression d'au moins une pièce tridimensionnelle en utilisant le ou les matériaux d'impression contenus dans ladite cartouche.

## Patentansprüche

1. Druckpatrone für ein System zum Drucken dreidimensionaler Teile, die mindestens einen Vorrat (28, 48) eines Druckmaterials enthält, **dadurch gekennzeichnet, dass** sie ein Zugangsmodul (50) auf Code-Anweisungen (52, 64) umfasst, die von dem Drucksystem ausgeführt werden können, um unter Verwendung des oder der in der Patrone enthaltenen Druckmaterials oder Druckmaterialien mindestens ein dreidimensionales Teil mit einer vorbestimmten Form zu drucken, der oder die in der Patrone enthaltenen Druckmaterialvorräte umfassend das oder die Druckmaterialien in vorbestimmten Mengen, die notwendig und ausreichend sind, um eine vorbestimmte Anzahl der dreidimensionalen Teile zu drucken.

2. Druckpatrone nach Anspruch 1, wobei das Zugangsmodul (50) eine elektronische Speichereinheit ist, die geeignet ist, um Daten zu speichern und ferner mindestens eine Verbindungseinheit (56) aufweist, die geeignet ist, um mit einer entsprechenden Aufnahmeeinheit (58) verbunden zu werden, die zu einem Druckpatronenhalter des Drucksystems gehört, wobei die Verbindungseinheit (56) geeignet ist, um die gespeicherten Daten über die Empfangseinheit (58) an eine Rechen- und Steuereinheit (34) des Drucksystems zu übertragen.

3. Druckpatrone nach Anspruch 2, wobei das Zugangsmodul (50) die Code-Anweisungen (52) in einer geeigneten Maschinensteuerungssprache speichert.

4. Druckpatrone nach Anspruch 2, wobei das Zugangsmodul (50) eine Zugriffskennung (53) speichert, umfassend eine Zugangsadresse für den Zugriff auf die Code-Anweisungen (64) in einem Telekommunikationsnetz auf einem entfernten Server (60).

5. Druckpatrone nach Anspruch 1, wobei das Zugangsmodul (50) zum Zugriff zu Code-Anweisungen eine Kennung ist, die auf einer Außenseite der Druckpatrone angeordnet oder eingebrannt ist, wobei die Kennung eine Zugriffsadresse in einem Telekommunikationsnetz auf die Code-Anweisungen (64) auf einem entfernten Server (60) codiert.

6. Druckpatrone nach einem der Ansprüche 1 bis 5, wobei das Druckmaterial mindestens ein schmelzbares Filament oder eine Druckflüssigkeit oder ein Druckpulver umfasst.

7. Druckpatrone nach einem der Ansprüche 1 bis 6, wobei der mindestens eine Druckmaterialvorrat (48) eine Abwickelspule aus mindestens einer Art von schmelzbarem Filament umfasst.

8. Druckpatrone nach Anspruch 7, umfassend eine Heizdüse (76), die geeignet ist, um das schmelzbare Filament in ein flüssiges Material umzuwandeln, das geeignet ist, um ein dreidimensionales Teil in Schichten zu drucken.

9. Druckpatrone nach einem der Ansprüche 7 oder 8, umfassend mindestens einen Sensor (74, 74b) aus einem Temperatursensor (74) und einem Sensor (74b) für den Wechsel des Filamenttyps.

10. Drucksystem für dreidimensionale Teile, **dadurch gekennzeichnet, dass** es einen Patronenhalter (70) umfasst, der angepasst ist, um eine Druckpatrone (46) aufzunehmen, die mindestens einen Vorrat (28, 48) eines Druckmaterials enthält, die Druckpatrone umfassend ein Zugangsmodul (50) zu Code-Anweisungen (52, 64), die von dem Drucksystem ausgeführt werden können, um unter Verwendung des oder der in der Patrone enthaltenen Druckmaterialien mindestens ein dreidimensionales Teil mit einer vorbestimmten Form zu drucken, das oder die in der Patrone enthaltenen Druckmaterialvorräte umfassend das oder die Druckmaterialien in vorbestimmten Mengen, die notwendig und ausreichend sind, um das Drucken einer vorbestimmten Anzahl der dreidimensionalen Teile zu realisieren, der Patronenhalter (70) umfassend eine Verbindungsschnittstelle, die geeignet ist, um eine Zugangskennung (53) zu Code-Anweisungen (64) zum Drucken eines dreidimensionalen Teils oder Code-Anweisungen (52) zum Drucken mindestens eines dreidimensionalen Teils unter Verwendung des oder der Druckmaterialien, die in der Patrone enthalten sind, abzurufen.

## Claims

1. A printing cartridge for a system for printing three-dimensional parts, containing at least one store (28, 48) of a printing material, **characterized in that** it comprises a module (50) for accessing code instructions (52, 64) executable by the printing system for printing at least one three-dimensional part with a predetermined shape by using the printing material(s) contained in the cartridge, the store(s) of printing material(s) contained in the cartridge comprising the printing material(s) in predetermined quantity or quantities, necessary and sufficient to perform the printing of a predetermined number of said three-dimensional parts.

2. The printing cartridge according to claim 1, wherein said access module (50) is an electronic storage unit able to store data, and the cartridge further includes at least one connection unit (56) suitable for connecting to a corresponding receiving unit (58) belonging to a printing cartridge holder of said printing system, said connection unit (56) being suitable for sending said stored data to a computing and command unit (34) of the printing system via said receiving unit (58).

3. The printing cartridge according to claim 2, wherein the access module (50) stores the code instructions (52) in a suitable machine command language.

4. The printing cartridge according to claim 2, wherein the access module (50) stores an access identifier (53) including an address for accessing, in a telecommunication network, said code instructions (64) on a remote server (60).

5. The printing cartridge according to claim 1, wherein the module (50) for accessing code instructions is an identifier arranged or etched on an outer face of the printing cartridge, said identifier encoding an address for accessing, in a telecommunication network, said code instructions (64) on a remote server (60).

6. The printing cartridge according to one of claims 1 to 5, wherein said printing material comprises at least one fusible filament, or a printing liquid or a printing powder.

7. The printing cartridge according to one of claims 1 to 6, wherein said at least one store of printing material (48) includes a spool to be unwound from at least one type of fusible filament.

8. The printing cartridge according to claim 7, including a heating nozzle (76) suitable for transforming said fusible filament into liquid material suitable for printing a three-dimensional part by layers.

9. The printing cartridge according to one of claims 7 or 8, including at least one sensor (74, 74b) from among a temperature sensor (74) and a filament type change sensor (74b).

10. A system for printing three-dimensional parts, **characterized in that** it includes a cartridge holder (70) suitable for receiving a printer cartridge (46) containing at least one store (28, 48) of a printing material, said cartridge comprising a module (50) for accessing code instructions (52, 64) executable by the printing system for printing at least one three-dimensional part with a predetermined shape by using the printing material(s) contained in the cartridge, the store(s) of printing material(s) contained in the cartridge comprising the printing material(s) in predetermined quantity or quantities, necessary and sufficient to perform the printing of a predetermined number of said three-dimensional parts, said cartridge holder (70) comprising a connection interface suitable for recovering an identifier (53) for accessing code instructions (64) for printing a three-dimensional part or code instructions (52) for printing at least one three-dimensional part by using the printing material(s) contained in said cartridge.
